# EUROPÄISCHE PATENTSCHRIFT

(11) **EP 4 504 582 B1**
(45) Veröffentlichungstag und Bekanntmachung des Hinweises auf die Patenterteilung: **21.01.2026**
(21) Anmeldenummer: 23716513.9
(22) Anmeldetag: 31.03.2023
(51) Int. Cl.: B62M 3/08

(54) **PEDAL MIT EINSTELLBARER ROTATIONSBREMSE**
PEDAL WITH ADJUSTABLE ROTATION BRAKE
PÉDALE À FREIN DE ROTATION RÉGLABLE

(30) Priorität: 06.04.2022 DE 102022203450
(43) Veröffentlichungstag der Anmeldung: 12.02.2025
(73) Patentinhaber: Sport Import GmbH, 26188 Edewecht (DE)
(72) Erfinder: LAUER, Swen, 82467 Garmisch-Partenkirchen (DE)
(74) Vertreter: Fischer, Florian
(86) Internationale Anmeldenummer: PCT/EP2023/058557
(87) Internationale Veröffentlichungsnummer: WO 2023/194257

(56) Entgegenhaltungen:
- WO-A1-89/04791
- DE-A1- 102021 124 558

## Beschreibung

Das hierin beschriebene innovative Konzept betrifft ein Pedal, insbesondere für Fahrräder. Das Pedal weist erfindungsgemäß eine einstellbare Rotationsbremse auf, mit der die zur Drehung des Pedals benötigte Kraft einstellbar ist. Dadurch kann das Pedal nach Belieben so eingestellt werden, dass es sich entweder schwergängig oder leichtgängig dreht.

Pedale werden für Gewöhnlich bei Fahrzeugen eingesetzt, die mittels einer Tretkurbel angetrieben werden, d.h. die Antriebskraft wird über die Tretkurbel mittels eines Kettentriebs, eines Riementriebs oder dergleichen auf das angetriebene Rad bzw. die angetriebenen Räder übertragen. Die Pedale dienen dazu, um dem Fahrer die Kraftübertragung auf die Tretkurbel zu ermöglichen und ihm dabei einen sicheren Stand zu ermöglichen.

Diese Form des Antriebs findet insbesondere bei Zweirädern Verwendung. Hierzu zählen unmotorisierte Fahrräder sowie Fahrräder mit Motorunterstützung, wie zum Beispiel sogenannte Pedelecs oder E-Bikes. Aber auch mehrspurige Fahrzeuge, wie z.B. Dreiräder oder Vierräder, sind teilweise mit Kurbeltrieb ausgestattet.

Die Pedale werden in die Kurbel eingeschraubt. Hierfür weisen die Pedale eine Achse auf, die fahrzeugseitig ein Gewinde aufweist mittels dem das Pedal in ein entsprechendes Gegengewinde in der Kurbel eingeschraubt wird. Der Pedalkörper ist drehbar auf dieser Achse gelagert, sodass sich das Pedal bei einer Drehung der Kurbel stets in der Horizontalen befindet, um dem Fahrer eine horizontale Trittfläche zu bieten und so ein kontinuierliches Treten zu ermöglichen.

Dies bedeutet anderseits aber auch, dass sich das Pedal jederzeit frei drehen kann, wenn es an der Kurbel befestigt ist. Dies kann in manchen Einsatzbereichen jedoch unerwünscht sein. Beispielsweise im BMX- oder Mountainbike-Sport sind Drehungen des Pedals in manchen Situationen, beispielsweise bei Sprüngen, unerwünscht. Beim sogenannten Slope Style, einer Disziplin, bei der der Athlet hohe Sprünge über Schanzen ausübt, kann es durchaus vorkommen, dass der Athlet mit seinem Schuh von der Aufstandsfläche des Pedals abhebt. Dies kommt insbesondere dann vor, wenn während der sogenannten Air Time zusätzlich noch Tricks mit eingebaut werden. Wenn der Kontakt zwischen Schuh und Pedal verlorengeht, kann sich das Pedal frei drehen. Somit ist es für den Fahrer schwierig, das sich drehende Pedal bei der Landung wieder genau zu treffen, um beim Landen des Tricks einen Sturz zu vermeiden.

Um diese ungewollten Drehungen des Pedals zu unterbinden, sind Pedale auf dem Markt, die einen O-Ring und ein Gleitlager aufweisen, welches eine hohe Reibkraft auf die Pedalachse ausübt, sodass sich das Pedal schwerer dreht. Diese Plastikgleitlager unterliegen jedoch einem hohen Verschleiß, insbesondere bedingt durch das Pedalieren während der normalen Fahrt. Hinzu kommt, dass ein stark bremsendes Pedal beim Pedalieren, und insbesondere beim bergauf fahren, absolut unerwünscht ist, da die hohen Reibkräfte eine zusätzliche Kraftanstrengung für den Fahrer bedeuten.

In der WO 89 / 04791 A1 ist eine Fahrradpedalanordnung mit Bremse beschrieben. Die Pedalanordnung weist eine Pedalspindel, einen Pedalkörper, der drehbar auf der Pedalspindel montiert ist, und eine Bremsanordnung auf. Die Bremsanordnung umfasst einen Bremsarm, der eine Bremszunge zum Eingriff in die Pedalachse aufweist. Der Bremsarm wird selektiv zwischen einer ersten Position, in der die Bremszunge in die Pedalachse eingreift, um die Drehung des Pedalkörpers zu begrenzen, und einer zweiten Position, in der die Bremszunge von der Pedalachse gelöst ist, positioniert. Der Bremsarm ist durch eine Feder in die erste Position vorgespannt. Auf dem Bremsarm kann ein Fußpolster zur Betätigung durch den Benutzer vorgesehen sein, und ein Pedalspindeleinsatz kann über der Pedalspindel angeordnet sein, um mit dem Bremsarm in Eingriff zu kommen. In einer alternativen Ausführung umfasst die Bremsbaugruppe einen Widerstandsring, der sich auf der Pedalspindel befindet, eine Feder, die die Drehung des Widerstandsrings auf der Pedalspindel verhindert, und eine Sperrklinke, die sich auf dem Pedalkörper befindet, um in den Widerstandsring einzugreifen und die relative Rückwärtsdrehung des Pedalkörpers auf der Pedalspindel zu begrenzen.

Es wäre demnach wünschenswert, bisherige Pedale dahingehend zu verbessern, dass diese eine unerwünschte Drehung des Pedals (z.B. bei Sprüngen) weitestgehend unterbinden, gleichzeitig aber eine erwünschte Drehung des Pedals (z.B. beim bergauf fahren) zulassen, und gleichzeitig eine hohe Langlebigkeit aufweisen.

Deshalb wird ein Pedal mit den Merkmalen gemäß Anspruch 1 vorgeschlagen. Weitere Ausführungsformen und vorteilhafte Aspekte dieses Pedals sind in den jeweils abhängigen Patentansprüchen genannt.

Das erfindungsgemäße Pedal weist einen Pedalkörper auf, sowie eine Pedalachse, die sich zumindest abschnittsweise durch den Pedalkörper hindurch erstreckt. Der Pedalkörper ist drehbar auf der Pedalachse gelagert. Erfindungsgemäß weist das Pedal eine justierbare Rotationsbremse auf, die während einer Drehung des Pedalkörpers eine einstellbare Bremskraft auf die Pedalachse ausübt, um die Drehung des Pedalkörpers im Vergleich zu einer ungebremsten Drehung abzubremsen. Dies ermöglicht es, die auf die Pedalachse wirkende Bremskraft je nach Bedarf einzustellen. Beispielsweise kann ein Slopestyler, d.h. ein Athlet, der Sprünge und Tricks mit seinem Fahrrad vollführt, die Bremskraft vor einer Abfahrt erhöhen, sodass sich die Pedale kaum bzw. nur schwer drehen lassen. Ein Cross Country Fahrer oder Marathonfahrer hingegen kann die Bremskraft vor einer Bergauffahrt reduzieren, sodass sich die Pedale sehr leicht und nahezu ohne Widerstand drehen lassen, um möglichst wenig Reibungsverluste beim Pedalieren zu haben.

Erfindungsgemäß ist die Rotationsbremse im Pedalkörper integriert, d.h. innerhalb des Pedalkörpers verbaut. Dies schützt die Rotationsbremse vor Staub und Schmutz. Alternativ oder zusätzlich kann die Rotationsbremse mittels eines im Pedalkörper angeordneten Betätigungsmittels von außen zugänglich betätigbar sein, um hierüber die Bremskraft der Rotationsbremse einzustellen. Dies ermöglicht eine einfache Betätigung und Zugänglichkeit der im Pedal integrierten Rotationsbremse von außen, sodass die Rotationsbremse betätigt werden kann, ohne dass diese hierfür aus dem Pedal ausgebaut werden muss.

Erfindungsgemäß ist das Betätigungsmittel in Form eines Gewindestifts ausgestaltet, der in ein im Pedalkörper vorgesehenes Gewinde geschraubt ist. Dabei kann ein in den Pedalkörper hineinragendes axiales Ende des Gewindestifts mit der Rotationsbremse in Kontakt sein und hierüber eine Kraft auf die Rotationsbremse ausüben. Dies ist eine einfache Art der Ausgestaltung, um die Rotationsbremse von außen zu betätigen, insbesondere wenn diese im Pedal integriert ist. Bei der Schraube kann es sich um eine Madenschraube handeln, die von oben in den Pedalkörper eingeschraubt wird. Beim Hineindrehen der Schraube dringt diese immer tiefer in den Pedalkörper ein und drückt hierbei immer stärker auf die Rotationsbremse, die somit eine immer stärkere Bremskraft auf die Pedalachse ausübt. Beim Herausdrehen der Schraube verhält es sich dementsprechend genau andersherum.

Gemäß einer weiteren denkbaren Ausführungsform kann die Rotationsbremse einen Reibkörper aufweisen, der mit einem Teil der Pedalachse in Kontakt ist, um die Bremskraft in Form einer Reibkraft auf die Pedalachse auszuüben. Der Reibkörper kann vorzugsweise aus einem Material bestehen, das gegenüber dem Material der Pedalachse eine hohe Reibungskraft erzielt, d.h. die Reibkörperpaarung zwischen der Pedalachse und dem Reibkörper sollte einen möglichst hohen Reibungskoeffizienten µ aufweisen. Pedalachsen werden in der Regel aus Aluminium oder Titan gefertigt. Die erfindungsgemäße Rotationsbremse kann aus Kunststoff gefertigt sein. Die Rotationsbremse kann beispielsweise ein Material aufweisen, welches auch zur Herstellung von Gleitlagerbuchsen verwendet wird.

Gemäß einer weiteren denkbaren Ausführungsform kann die Rotationsbremse in Form einer Wellenmanschette ausgebildet sein, die um die Pedalachse herum angeordnet ist. Alternativ oder zusätzlich kann die Wellenmanschette einen quer zur Umfangsrichtung verlaufenden Schlitz aufweisen, der am Umfang der Wellenmanschette einen Spalt mit variabler Spaltbreite definiert. Die Wellenmanschette kann also geschlitzt ausgeführt sein, d.h. die Wellenmanschette kann einen Querschlitz aufweisen und somit im Bereich des Schlitzes offen bzw. aufgetrennt sein. Dieser Schlitz trennt also die Wellenmanschette auf, sodass diese eben gerade nicht vollumfänglich geschlossen ausgeführt ist. Der Schlitz definiert sozusagen einen Spalt, und die Breite des Schlitzes wiederum definiert dementsprechend die Spaltbreite. Beispielsweise kann die Wellenmanschette eine Ringform aufweisen, wobei der Ring an einer Stelle einen Schlitz aufweist und an dieser Stelle geöffnet bzw. aufgetrennt ist, sodass der Ring eben nicht vollumfänglich geschlossen ist. An dieser Öffnung bzw. an diesem Schlitz kann die ringförmige Wellenmanschette auseinandergezogen werden, sodass die Spaltbreite größer wird und sich der Innenradius der Wellenmanschette dementsprechend vergrößert. Andererseits kann die Wellenmanschette an dieser Öffnung bzw. an diesem Schlitz zusammengedrückt werden, sodass die Spaltbreite kleiner wird und sich der Innenradius der Wellenmanschette dementsprechend verkleinert.

Gemäß einer weiteren denkbaren Ausführungsform kann die Wellenmanschette eine Klemmkraft auf die Pedalachse ausüben, wobei der Betrag der Klemmkraft durch eine Variation der Spaltbreite veränderlich ist. Wie eingangs erwähnt, kann die Spaltbreite durch Weiten der Wellenmanschette bzw. durch Zusammendrücken der Wellenmanschette variiert werden. Dies ist ähnlich zum Funktionsprinzip einer vorgespannten Klammer oder Klemme. Die geschlitzte Wellenmanschette klemmt also sozusagen die Pedalachse zwischen sich ein. Dabei übt die Wellenmanschette eine Klemmkraft auf die Pedalachse aus. Wenn sich nun, wie oben beschrieben, die Spaltbreite reduziert (z.B. durch ein Zusammendrücken der Wellenmanschette), dann erhöht sich dementsprechend die Klemmkraft. Durch eine Erhöhung der Klemmkraft steigt auch die auf die Pedalachse ausgeübte Reibungskraft, und dementsprechend erhöht sich die Bremskraft, sodass sich das Pedal langsamer bzw. schwerer dreht. Wenn sich hingegen, wie oben beschrieben, die Spaltbreite erhöht (z.B. durch ein Auseinanderziehen oder Lockern der Wellenmanschette), dann reduziert sich dementsprechend die Klemmkraft. Durch eine Reduzierung der Klemmkraft sinkt auch die auf die Pedalachse ausgeübte Reibungskraft, und dementsprechend reduziert sich die Bremskraft, sodass sich das Pedal schneller bzw. leichter dreht.

Diese Ausführungsform der Wellenmanschette hat noch einen weiteren wichtigen Vorteil. Und zwar kann über die Variation der Spaltbreite auch das Lagerspiel der Pedalachse eingestellt werden. Bedingt durch Verschleiß kann die Pedalachse ein zunehmend größer werdendes radiales Lagerspiel aufweisen, d.h. die Achse beginnt im Pedalkörper zu schlackern. Durch ein Nachstellen der Rotationsbremse, d.h. durch ein Erhöhen der Klemmkraft, kann dieses radiale Lagerspiel ausgeglichen werden. Die Rotationsbremse dient somit also auch als ein justierbares Lager. Dementsprechend kann die Rotationsbremse dazu ausgestaltet sein, um ein radiales Lagerspiel einzustellen bzw. auszugleichen, indem die Klemmkraft variiert wird.

Gemäß einer weiteren denkbaren Ausführungsform kann die Rotationsbremse einen Vorsprung aufweisen, der sich radial vom Umfang der Wellenmanschette nach außen erstreckt, wobei der Vorsprung und das Betätigungsmittel derart zueinander ausgerichtet sind, dass mittels des Betätigungsmittels eine Kraft auf den Vorsprung ausübbar ist, um hierüber die Spaltbreite in der Wellenmanschette zu variieren und dadurch die auf die Pedalachse wirkende Bremskraft einzustellen. Vorzugsweise kann die Wellenmanschette einen solchen Vorsprung im Bereich des Schlitzes aufweisen, d.h. dort wo der Schlitz die Wellenmanschette auftrennt und zwei (sich gegenüberliegende) offene Enden der Wellenmanschette bildet, kann an einem offenen Ende der Wellenmanschette dieser Vorsprung vorgesehen sein. Dieser Vorsprung bildet eine Art Lasche, mittels derer der Schlitz in der Wellenmanschette zusammengedrückt werden kann, um die Spaltbreite zu reduzieren. Ebenso kann an diesem Vorsprung bzw. an dieser Lasche der Schlitz in der Wellenmanschette auseinandergezogen werden, um die Spaltbreite zu vergrößern.

Gemäß einer weiteren denkbaren Ausführungsform kann der Vorsprung eine Ausnehmung aufweisen, in die das Betätigungsmittel eingreift. Dadurch kann eine formschlüssige Verbindung zwischen dem Betätigungsmittel und dem Vorsprung hergestellt werden, sodass das Betätigungsmittel formschlüssig und somit sicher mit dem Vorsprung verbunden ist. Dadurch kann verhindert werden, dass das Betätigungsmittel von dem Vorsprung abrutscht.

Gemäß einer weiteren denkbaren Ausführungsform kann im Pedalkörper eine Ausnehmung vorgesehen sein, in die der Vorsprung der Wellenmanschette einsetzbar ist. Die Ausnehmung im Pedalkörper kann eine Kontur aufweisen, die komplementär zur Kontur des Vorsprungs an der Wellenmanschette ist. Somit kann zunächst sichergestellt werden, dass die Wellenmanschette mitsamt dem Vorsprung in den Pedalkörper eingepasst werden kann. Zudem kann eine formschlüssige Verbindung zwischen dem Pedalkörper und der Wellenmanschette hergestellt werden. Alternativ oder zusätzlich kann die Aussparung im Pedalkörper ein Übermaß gegenüber dem Vorsprung aufweisen, sodass der Vorsprung beweglich in der Ausnehmung angeordnet ist. Das heißt, die Kontur der Aussparung im Pedalkörper kann etwas größer sein als die Kontur des Vorsprungs an der Wellenmanschette. Dadurch kann gewährleistet werden, dass sich der Vorsprung innerhalb des Pedalkörpers (z.B. auf und ab-) bewegen kann, sodass die Spaltbreite variiert werden kann.

Gemäß einer weiteren denkbaren Ausführungsform kann die Rotationsbremse in einem Bereich des Pedalkörpers angeordnet sein, in dem die Pedalachse aus dem Pedalkörper austritt. Dies ermöglicht eine einfache Zugänglichkeit der Rotationsbremse, zum Beispiel zu Wartungszwecken. Dort wo die Pedalachse aus dem Pedalkörper herausragt, wird die Pedalachse auch entnommen. Wenn die Rotationsbremse also ganz zu Beginn der Pedalachse auf dieser angeordnet ist, so ist die Rotationsbremse beim Lösen der Pedalachse auch unmittelbar zugänglich. Das heißt, die Pedalachse muss lediglich ein kleines Stück weit aus dem Pedalkörper herausgezogen werden, um direkt an die Rotationsbremse zu gelangen.

Gemäß einer weiteren denkbaren Ausführungsform kann die Bremskraft stufenlos einstellbar sein. Außerdem kann die Bremskraft zwischen 0% und 100% frei einstellbar sein. Das heißt, die Rotationsbremse kann ganz zu sein (Bremskraft = 100%), z.B. indem der Spalt nahezu geschlossen ist. Dann entfaltet die Rotationsbremse ihre maximale Bremskraft. Die Rotationsbremse kann aber auch ganz geöffnet sein, z.B. indem die Rotationsbremse nur lose auf der Pedalachse anliegt, sodass keine spürbare Bremskraft mehr auf die Pedalachse wirkt.

Einige Ausführungsbeispiele sind exemplarisch in der Zeichnung dargestellt und werden nachstehend erläutert. Es zeigen:
- Fig. 1: eine schematische Perspektivansicht auf ein Pedal gemäß einem Ausführungsbeispiel,
- Fig. 2: eine teiltransparente Darstellung des Pedals in einer Perspektivansicht gemäß einem Ausführungsbeispiel,
- Fig. 3: einen vergrößerten Ausschnitt des Pedals zur Visualisierung der erfindungsgemäßen Rotationsbremse gemäß einem Ausführungsbeispiel,
- Fig. 4: eine schematische Schnittdarstellung der erfindungsgemäßen Rotationsbremse in einer Frontalansicht, und
- Fig. 5: einen schematischen Längsschnitt durch die Pedalachse.

Im Folgenden werden Ausführungsbeispiele mit Bezug auf die Figuren näher beschrieben, wobei Elemente mit derselben oder ähnlichen Funktion mit denselben Bezugszeichen versehen sind.

Das erfindungsgemäße Pedal wird am Beispiel eines Fahrradpedals beschrieben, insbesondere am Beispiel eines sogenannten Plattformpedals, das auch als Flat Pedal bezeichnet wird. Alle hierin gemachten Ausführungen gelten aber natürlich auch für andere Pedalformen, wie beispielsweise Click-Pedale. Zudem gilt die in diesem Dokument enthaltene Beschreibung für Pedale, unabhängig davon, an welchem Fahrzeug sie montiert sind. Beispielsweise betrifft die vorliegende Erfindung sowohl Pedale, die an unmotorisierten Fahrrädern montiert werden, als auch Pedale, die an motorisierten Fahrrädern, wie z.B. E-Bikes, Pedelecs und dergleichen montiert werden.

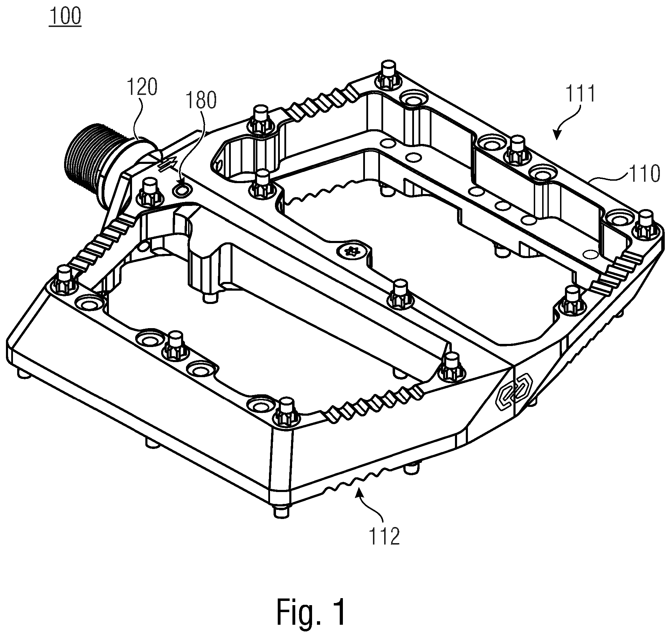

Figur 1 zeigt eine Perspektivansicht eines Pedals 100. Hierbei handelt es sich um ein Fahrradpedal, und insbesondere um ein sogenanntes Plattformpedal, das auch als Flat Pedal bezeichnet wird. Das Pedal 100 weist einen Pedalkörper 110 mit einer ersten Standfläche 111 und einer gegenüberliegenden zweiten Standfläche 112 auf. Der Fahrer steht während des Pedalierens mit seinem Schuh auf einer dieser Standflächen 111, 112.

Der Pedalkörper 110 weist ein Betätigungsmittel 180 auf, das erfindungsgemäß in einer der Standflächen 111, 112 vorgesehen bzw. integriert ist. Das Betätigungsmittel 180 dient zum Betätigen einer erfindungsgemäßen Rotationsbremse, wie sie unter Bezugnahme auf die nachfolgenden Figuren noch näher beschrieben wird. Die Rotationsbremse ist im Pedalkörper 110 integriert, weshalb sie in der in Figur 1 dargestellten Ansicht nicht sichtbar ist.

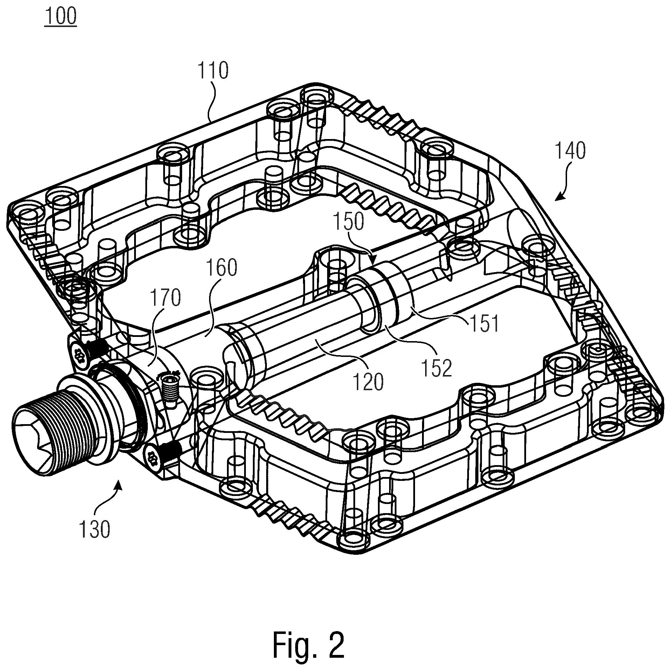

Das Pedal 100 weist außerdem eine Pedalachse 120 auf, die sich zumindest teilweise durch den Pedalkörper 110 hindurch erstreckt. Dies ist in der teiltransparenten Ansicht in Figur 2 deutlicher erkennbar. Die Pedalachse 120 kann durch eine im Pedalkörper 110 vorgesehene Einführöffnung 130 in den Pedalkörper 110 eingeführt werden. In dem hier gezeigten Ausführungsbeispiel erstreckt sich die Pedalachse 120 bis etwa zur Mitte des Pedalkörpers 110 bzw. um bis zu 2/3 in den Pedalkörper 110 hinein. In anderen (hier nicht explizit dargestellten) Ausführungsformen kann sich die Pedalachse 120 nahezu vollständig durch den Pedalkörper 110 hindurch erstrecken, d.h. bis knapp zu der der Einführungsöffnung 130 gegenüberliegenden Seite 140 des Pedalkörpers 110.

Der Pedalkörper 110 ist drehbar auf der Pedalachse 120 gelagert. Dies kann beispielsweise mittels geeigneten Lagern, 150, 160 bewerkstelligt werden. Hierbei handelt es sich insbesondere um Radiallager, die das Spiel der Pedalachse 120 in radialer Richtung beschränken.

Beispielsweise kann in einem hinteren Achsabschnitt, d.h. im Bereich nahe der Einführöffnung 130, ein erstes Radiallager 160, zum Beispiel in Form eines Gleitlagers, vorgesehen sein. Hierbei kann es sich um eine Gleitbuchse handeln, die um die Pedalachse 120 herum angeordnet ist.

In einem vorderen Achsabschnitt, d.h. in einem von der Einführöffnung 130 entfernt gelegenen Abschnitt der Pedalachse 120, kann ein zweites Radiallager 150 vorgesehen sein. Hierbei kann es sich beispielsweise um ein Kugellager 151, vorzugsweise um ein Rillenkugellager, handeln, das auf der Pedalachse 120 angeordnet ist. Wie in Figur 2 rein beispielhaft dargestellt ist, kann auch ein zweites Kugellager 152 auf der Pedalachse 120 angeordnet sein. Anstelle des ersten und/oder zweiten Kugellagers 151, 152 kann auch hier ein Gleitlager, zum Beispiel in Form einer Gleitbuchse, vorgesehen sein.

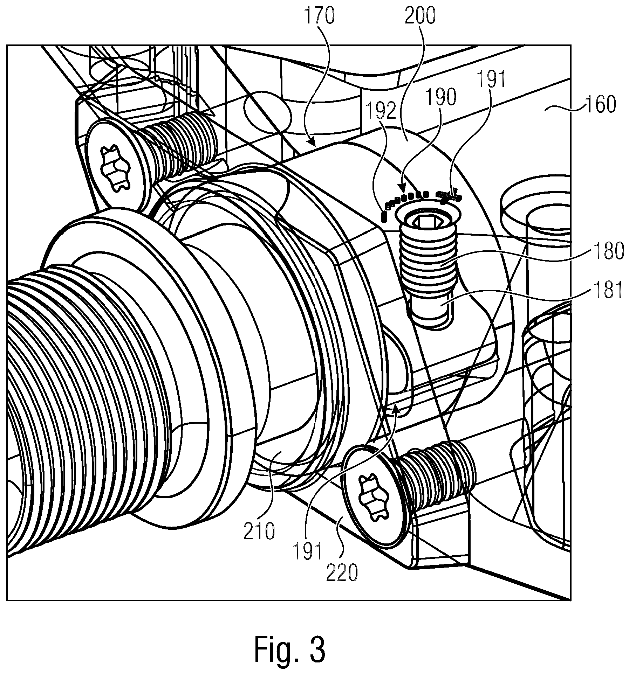

Erfindungsgemäß weist das Pedal 100 außerdem eine einstellbare bzw. justierbare Rotationsbremse 170 auf. Die Rotationsbremse 170 ist in der vergrößerten Darstellung gemäß Figur 3 deutlicher erkennbar.

Die Rotationsbremse 170 ist ausgestaltet, um während einer Drehung des Pedalkörpers 110 eine einstellbare Bremskraft auf die Pedalachse 120 auszuüben, um die Drehung des Pedalkörpers 110 im Vergleich zu einer ungebremsten Drehung abzubremsen. Das heißt, die Rotationsbremse 170 bremst die Drehung des Pedals 100. Die Bremskraft, die die Rotationsbremse 170 hierfür auf die Pedalachse 120 ausübt, ist einstellbar. Das heißt, die Drehung des Pedals 100 kann mittels der erfindungsgemäßen Rotationsbremse 170 eingestellt werden. Somit kann beispielsweise ein Fahrer einstellen, ob sich das Pedal 100 schnell bzw. einfach, oder aber schwergängig bzw. langsam, dreht.

Vorzugsweise kann die Bremskraft der Rotationsbremse 170 hierfür stufenlos zwischen 0% und 100% verstellt werden. Das heißt, die Rotationsbremse 170 kann so eingestellt werden, dass sie nahezu keine spürbare Bremskraft (Bremskraft = 0%) auf die Pedalachse 120 ausübt. Dadurch kann sich der Pedalkörper 110, mit Ausnahme der Reibungskräfte der zuvor erwähnten Lager 150, 160, nahezu ohne weitere durch die Rotationsbremse 170 verursachte Bremskräfte frei auf der Pedalachse 120 drehen. Die Rotationsbremse 170 kann im Gegensatz dazu aber auch so eingestellt werden, dass sie eine maximale Bremskraft (Bremskraft = 100%) auf die Pedalachse 120 ausübt. Das Pedal 100 kann dabei mittels der Rotationsbremse 170 so stark gebremst werden, dass sich der Pedalkörper 110 kaum noch frei auf der Pedalachse 120 drehen lässt. Die Bremskraft kann dabei vorzugsweise stufenlos einstellbar sein.

Wie es in den Figuren 2 und 3 zu erkennen ist, ist die Rotationsbremse 170 erfindungsgemäß in dem Pedalkörper 110 integriert. Das heißt, die Rotationsbremse 170 ist innerhalb des Pedalkörpers 110 verbaut. Mittels eines von außen zugänglichen Betätigungsmittels 180 wird die im Pedalkörper 110 integrierte Rotationsbremse 170 erfindungsgemäß von außen betätigt. Das Betätigungsmittel 180 kann dabei am bzw. im Pedalkörper 110 angeordnet sein.

Bei dem besagten Betätigungsmittel 180 handelt es sich erfindungsgemäß um einen Gewindestift, wie er in Figur 3 dargestellt ist. Das Betätigungsmittel 180 kann beispielsweise in Form einer Madenschraube ausgestaltet sein, die in eine entsprechende Bohrung im Pedalkörper 110 eingeschraubt werden kann. Ein in den Pedalkörper hineinragender axialer Endabschnitt 181 des Betätigungsmittels 180 bzw. des Gewindestifts (z.B. Madenschraube) kommt dabei erfindungsgemäß mit der Rotationsbremse 170 in Kontakt, um hierüber eine Kraft auf die Rotationsbremse 170 auszuüben. Diese auf die Rotationsbremse 170 ausgeübte Betätigungskraft, z.B. in Form einer Druckkraft, verursacht die Bremskraft, die die Rotationsbremse 170 auf die Pedalachse 120 ausübt. Anders ausgedrückt wandelt die Rotationsbremse 170 die auf sie (mittels dem Betätigungsmittel 180) ausgewirkte Betätigungskraft in die gewünschte Bremskraft um, um die Pedalachse 120 abzubremsen.

Die Betätigungskraft und die Bremskraft korrelieren hierbei miteinander, d.h. je größer die Betätigungskraft ist, die auf die Rotationsbremse 170 ausgeübt wird, desto größer wird auch die auf die Pedalachse ausübbare Bremskraft. Anders herum gilt somit natürlich auch, je geringer die Betätigungskraft ist, die auf die Rotationsbremse 170 wirkt, desto geringer ist auch die auf die Pedalachse 120 wirkende Bremskraft.

Die Rotationsbremse 170 kann die Bremskraft auf die Pedalachse 120 beispielsweise mittels eines Reibkörpers übertragen, wobei die Bremskraft in Form einer Reibkraft auf die Pedalachse 120 ausgeübt wird. Hierfür kann der Reibkörper beispielsweise mit einem Teil der Pedalachse 120 in Kontakt sein. Der Reibkörper und die Pedalachse 120 bilden hierbei eine Reibkörperpaarung. Die Reibkörperpaarung sollte vorzugsweise einen hohen Reibungswert µ aufweisen, um mittels moderater Betätigungskräfte eine möglichst große Reibkraft, und somit eine möglichst große Bremskraft, auf die Pedalachse 120 auszuüben. Gemäß denkbaren Ausführungsbeispielen kann der Reibkörper ein Material aufweisen, das auch für Gleitlager bzw. Gleitbuchsen verwendet wird. Beispielsweise können der Reibkörper und die Gleitbuchse 160 aus dem gleichen Material hergestellt sein.

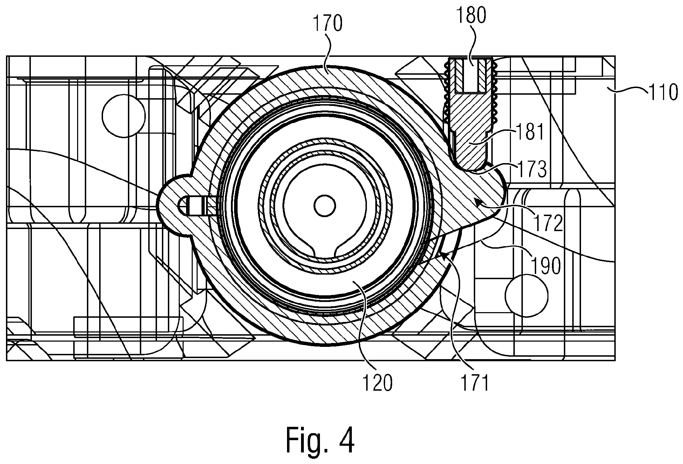

Wie in den Figuren 3 und 4 am deutlichsten zu erkennen ist, kann die Rotationsbremse 170 beispielsweise in Form einer Wellenmanschette ausgebildet sein, die um die Pedalachse 120 herum angeordnet ist. Die Wellenmanschette 170 bildet in diesem Beispiel den eingangs erwähnte Reibkörper, der mit der Pedalachse 120 in Kontakt ist.

Die Wellenmanschette 170 kann einen quer zu ihrer Umfangsrichtung verlaufenden Schlitz 171 aufweisen, d.h. die Wellenmanschette 170 ist nicht vollumfänglich geschlossen. Der Schlitz 171 definiert am Umfang der Wellenmanschette 170 einen Spalt mit variabler Spaltbreite. Aufgrund des Schlitzes 171 wird die Wellenmanschette 170 elastisch verformbar. Beispielsweise kann der Radius bzw. der Umfang der Wellenmanschette 170 verkleinert werden, und zwar um den Betrag der Spaltbreite des Schlitzes 171, indem die Wellenmanschette 170 zusammengedrückt wird. Sofern die Verformung der Wellenmanschette 170 elastisch ist bzw. elastisch bleibt, kann die Wellenmanschette 170 auch wieder in ihre ursprüngliche Form mit ihrem ursprünglichen Radius zurückkehren.

Wie insbesondere in Figur 4 zu erkennen ist, kann die Wellenmanschette 170 eine Klemmkraft auf die Pedalachse 120 ausüben. Der Betrag der Klemmkraft kann hierbei durch eine zuvor beschriebene Variation der Spaltbreite veränderlich sein. Beispielsweise führt ein Zusammendrücken der Wellenmanschette 170 dazu, dass sich der Radius der Wellenmanschette 170 verkleinert, wodurch sich die Spaltbreite des Schlitzes 171 reduziert. Dementsprechend kann die auf die Pedalachse 170 ausübbare Klemmkraft erhöht werden. Wenn die zusammengedrückte Wellenmanschette 170 wieder gelockert wird, dann vergrößert sich der Radius der Wellenmanschette 170 dementsprechend wieder, wodurch sich die Spaltbreite des Schlitzes 171 ebenfalls wieder erhöht. Dementsprechend reduziert sich die auf die Pedalachse 120 ausübbare Klemmkraft.

Um die Klemmkraft zu erzeugen, übt das zuvor erwähnte Betätigungsmittel 180 eine Betätigungskraft auf die Rotationsbremse 170 aus. Vorteilhafter Weise kann die Rotationsbremse 170 hierbei einen Vorsprung 172 aufweisen, der sich radial vom Umfang der Rotationsbremse 170 nach außen erstreckt. Dieser Vorsprung 172 kann in Form einer radial von der Rotationsbremse 170 abstehenden Lasche ausgestaltet sein.

Das Betätigungsmittel 180 kann die Betätigungskraft dabei auf diesen Vorsprung 172 ausüben. Das heißt, der Vorsprung 172 und das Betätigungsmittel 180 können derart zueinander ausgerichtet sein, dass die Betätigungskraft mittels des Betätigungsmittels 180 auf den Vorsprung 172 ausübbar ist, um hierüber die Spaltbreite in der Wellenmanschette 170 zu variieren und dadurch die auf die Pedalachse 120 wirkende Bremskraft einzustellen.

Beispielsweise kann das Betätigungsmittel 180 nach innen, d.h. in den Pedalkörper 110 hinein, geführt werden, um eine Betätigungskraft auf die Rotationsbremse 170 auszuüben. Wenn es sich bei dem Betätigungsmittel 180 erfindungsgemäß um einen Gewindestift (z.B. eine Madenschraube) handelt, so kann durch ein Hineindrehen des Gewindestifts 180 die Betätigungskraft auf den Vorsprung 172 erhöht werden. Dadurch erhöht sich die Klemmkraft, mit der die Rotationsbremse 170 die Pedalachse 120 einklemmt. Der Reibungswert µ der Reibkörperpaarung zwischen der Rotationsbremse 170 und der darin eingeklemmten Pedalachse 120 bestimmt mitunter die Bremskraft, die hierüber auf die Pedalachse 120 ausgeübt werden kann.

Das heißt, je weiter das Betätigungsmittel 180 in den Pedalkörper 110 hineingedreht wird, desto stärker drückt es auf den Vorsprung 172. Dadurch wird die geschlitzte Wellenmanschette 170 immer weiter zugedrückt, sodass sich die Spaltbreite reduziert wodurch die Klemmkraft auf die Pedalachse 120 erhöht wird. Dadurch erhöht sich auch die auf die Pedalachse 120 wirkende Bremskraft.

Wenn hingegen das Betätigungsmittel 180 in die entgegengesetzte Richtung aus dem Pedalkörper 110 herausgedreht wird, dann drückt es weniger stark auf den Vorsprung 172. Dadurch wird die geschlitzte Wellenmanschette 170 wieder in ihre ursprüngliche Form zurückgedrückt, sodass sich die Spaltbreite wieder vergrößert wodurch die Klemmkraft auf die Pedalachse 120 abnimmt. Dadurch reduziert sich auch die auf die Pedalachse 120 wirkende Bremskraft.

Wie in Figur 3 zu sehen ist, kann ein Indikator im Pedalkörper 110 vorgesehen sein, der eine Erhöhung bzw. Reduzierung der Bremskraft anzeigt. Hierbei kann es sich beispielweise um einen in den Pedalkörper 110 geprägten bzw. gestanzten Indikator handeln. Beispielsweise können um das Betätigungsmittel 180 herum ein "+" sowie ein "-" eingeprägt bzw. eingestanzt sein, um dem Nutzer anzuzeigen, in welche Richtung er drehen muss, um die Bremskraft zu erhöhen bzw. zu reduzieren.

Wie wiederum in Figur 4 zu erkennen ist, kann der zuvor beschriebene Vorsprung 172 eine Ausnehmung 173 aufweisen, in die das Betätigungsmittel 180 eingreifen kann. Hierfür ist die Ausnehmung 173 vorzugsweise in einem Abschnitt des Vorsprungs 172 ausgestaltet, der dem Betätigungsmittel 180 gegenüberliegend angeordnet ist. Die im Vorsprung 172 ausgestaltete Ausnehmung 173 und das Betätigungsmittel 180 können jeweils eine zueinander komplementäre geometrische Formkontur aufweisen, sodass das Betätigungsmittel 180 formschlüssig in die Ausnehmung 173 eingreifen kann. Dadurch kann gewährleistet werden, dass das Betätigungsmittel 180 gesichert mit dem Vorsprung 172 zum Eingriff kommt. Ein Abrutschen des Betätigungsmittels 180 vom Vorsprung 172 kann also unterbunden werden. Ferner kann dadurch gewährleistet werden, dass die Rotationsbremse 170 gegen ein axiales Verrutschen entlang der Pedalachse 120 gesichert ist.

Im Pedalkörper 110 kann eine Aussparung vorgesehen sein, in die der Vorsprung 172 der Rotationsbremse 170 einsetzbar ist. Diese Ausnehmung im Pedalkörper 110 ist in Figur 4 anhand der mit dem Bezugszeichen 190 versehenen Konturenlinie dargestellt. Die Aussparung 190 weist ein Übermaß im Vergleich zum Vorsprung 172 auf, d.h. die Aussparung 190 ist größer als der darin angeordnete Vorsprung 172. Dadurch ergibt sich ein Hohlraum in der Aussparung 190, in dem sich der Vorsprung 172 bewegen kann. Konkret kann der Vorsprung 172 dadurch eine Bewegung ausführen, die nötig ist, um die Spaltbreite zu reduzieren bzw. erhöhen. In Figur 3 ist dieser Hohlraum 191 zu sehen.

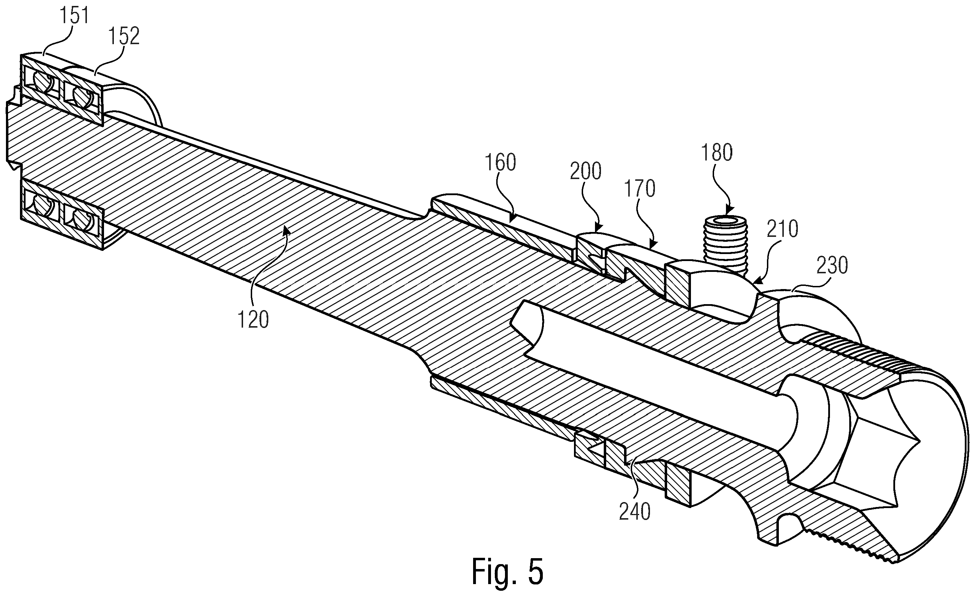

Die Figuren 3 und 5 zeigen ferner weitere optionale Komponenten des erfindungsgemäßen Pedals 100. Beispielsweise kann zwischen dem Gleitlager 160 und der Rotationsbremse 170 eine Wellenscheibe 200 angeordnet sein. Die Wellenscheibe 200 kann beispielsweise aus Filz bestehen. Die Wellenscheibe 200 kann eine Dichtwirkung erfüllen, um beispielsweise Abrieb vom Gleitlager 160 von der Rotationsbremse 170 fernzuhalten und/oder um das Eindringen von Schmutz, Staub und Feuchtigkeit zu unterbinden. Die Wellenscheibe 200 kann daher auch als Staubdichtung bezeichnet werden.

Im Bereich der Einführöffnung 130 der Pedalachse 120 in den Pedalkörper 110 kann eine weitere Wellenscheibe 210 vorgesehen sein, um zu verhindern, dass Schmutz, Staub und Feuchtigkeit zu der Rotationsbremse 170 gelangen. Diese weitere Wellenscheibe 210 kann beispielsweise aus Filz bestehen. Die Rotationsbremse 170 kann zwischen den beiden Wellenscheiben 200, 210 angeordnet sein. Dadurch kann die Rotationsbremse 170 nicht nur vor Staub, Schmutz und Feuchtigkeit gesichert sein, sondern die Rotationsbremse 170 kann auch gegen ein axiales Verrutschen entlang der Pedalachse 120 gesichert werden.

Vorteilhafter Weise kann die Rotationsbremse 170 in einem Bereich des Pedalkörpers 110 angeordnet sein, in dem die Pedalachse 120 aus dem Pedalkörper 110 austritt. Das heißt, die Rotationsbremse 170 kann im Bereich der Einführöffnung 130 angeordnet sein, bzw. an einem Ende des Pedalkörpers 110, der im eingebauten Zustand zum Fahrzeug, z.B. zur Tretkurbel eines Fahrrads, zeigt. Wenn die Pedalachse 120 aus dem Pedalkörper 110 ausgebaut wird, muss diese nur ein kleines Stück weit herausgezogen werden, damit die Rotationsbremse 170 direkt zugänglich ist. Die Pedalachse 120 muss also nicht vollständig ausgebaut werden, um an die Rotationsbremse 170, beispielsweise zu Reinigungs- oder Wartungszwecken, zu gelangen.

Wie in den Figuren 3 und 5 zu sehen ist, kann die Pedalachse 120 einen umlaufenden Kragen 230 aufweisen. Ein Deckel 220 (Figur 3) kann auf der Pedalachse 120 angeordnet werden, mittels dem die Einführöffnung 130 verschließbar ist. Der Deckel 220 bietet einen zusätzlichen Schutz vor eindringendem Schmutz, Staub und Feuchtigkeit. Der Deckel 220 kann beispielsweise an den Pedalkörper 110 angeschraubt werden. Der Deckel 220 kann sich hierbei an dem umlaufenden Kragen 230 der Pedalachse 120 axial abstützen. Das heißt, der Deckel 220 stützt sich an dem umlaufenden Kragen 230 ab und sichert die Pedalachse 120 dadurch vor einem axialen Verrutschen entlang der Pedalachse 120. Beispielsweise kann der Deckel 220 dadurch die Pedalachse 120 davor bewahren, aus dem Pedalkörper 110 herauszurutschen.

Alternativ oder zusätzlich kann die Pedalachse 120 einen umlaufenden Kragen 240 aufweisen, der im Bereich der Rotationsbremse 170 ausgebildet ist. Dieser umlaufende Kragen 140 kann eine geometrische Kontur aufweisen, die mit einer komplementären geometrischen Kontur in der Rotationsbremse 170 zum Eingriff kommt. Genauer gesagt kann die Rotationsbremse 170 auf ihrer Umfangsinnenseite, d.h. auf der Seite, die der Pedalachse 120 zugewandt ist, eine solche komplementäre geometrische Kontur aufweisen, die mit dem umlaufenden Kragen 240 der Pedalachse 120 zum Eingriff kommt. In Figur 5 ist rein beispielhaft eine keilförmige Kontur dargestellt, d.h. der umlaufende Kragen 240 weist eine Keilform auf, und die Rotationsbremse 170 weist eine hierzu komplementäre keilförmige Aussparung auf. Es kann aber ebenso denkbar sein, dass die beiden komplementären geometrischen Strukturen eine rechteckige, dreieckige, runde, oder anderweitige geometrische Kontur aufweisen. Diese beiden komplementären Strukturen (Kragen 240 auf der Pedalachse 120 bzw. Aussparung in der Rotationsbremse 170) können ein axiales Verrutschen der Rotationsbremse 170 entlang der Pedalachse 120 verhindern.

Alternativ oder zusätzlich zu den oben beschriebenen Merkmalen ist es außerdem denkbar, dass der Pedalkörper 110 mindestens eine schräge Standfläche 111, 112 aufweist. Diesbezüglich sei nochmals auf Figur 1 verwiesen. Einige Ausführungsbeispiele sehen vor, dass der Pedalkörper 110 eine (bzw. zwei) nach außen hin abfallende Standfläche(n) 111, 112 aufweist. Das heißt, die Standflächen 111, 112 könnten eine Keilform aufweisen, wobei die Standflächen 111, 112 von der Austrittsseite der Pedalachse 120 zum gegenüberliegenden Ende des Pedalkörpers 110 schräg nach unten (d.h. zur jeweils gegenüberliegenden Standfläche) abfallen können. In einem am Fahrrad montierten Zustand des Pedals 100 würden also die Standflächen 111, 112 keilförmig nach außen hin abfallen. Das keilförmige Pedal 100 könnte hierbei einen nach außen abfallenden Winkel von 0,5° bis 5° aufweisen.

Die oben beschriebenen Ausführungsbeispiele stellen lediglich eine Veranschaulichung der Prinzipien des hierin beschriebenen innovativen Konzepts dar. Es versteht sich, dass Modifikationen und Variationen der hierin beschriebenen Anordnungen und Einzelheiten anderen Fachleuten einleuchten werden. Deshalb ist beabsichtigt, dass das hierin beschriebene Konzept lediglich durch den Schutzumfang der nachstehenden Patentansprüche und nicht durch die spezifischen Einzelheiten, die anhand der Beschreibung und der Erläuterung der Ausführungsbeispiele hierin präsentiert wurden, beschränkt sei.

## Patentansprüche

1. Pedal (100) mit
einem Pedalkörper (110),
einer Pedalachse (120), die sich zumindest abschnittsweise durch den Pedalkörper (110) hindurch erstreckt,
wobei der Pedalkörper (110) drehbar auf der Pedalachse (120) gelagert ist, und
einer justierbaren Rotationsbremse (170), die während einer Drehung des Pedalkörpers (110) eine einstellbare Bremskraft auf die Pedalachse (120) ausübt, um die Drehung des Pedalkörpers (110) im Vergleich zu einer ungebremsten Drehung abzubremsen,
wobei die Rotationsbremse (170) im Pedalkörper (110) integriert ist, und
wobei die Rotationsbremse (170) mittels eines im Pedalkörper (110) angeordneten Betätigungsmittels (180) von außen zugänglich betätigbar ist, um hierüber die Bremskraft der Rotationsbremse (170) einzustellen,
**dadurch gekennzeichnet, dass**
das Betätigungsmittel (180) in Form eines Gewindestifts ausgestaltet ist, der in ein im Pedalkörper (110) vorgesehenes Gewinde geschraubt ist, und wobei ein in den Pedalkörper (110) hineinragendes axiales Ende (181) des Gewindestifts (180) mit der Rotationsbremse (170) in Kontakt ist und eine Kraft auf die Rotationsbremse (170) ausübt.

2. Pedal (100) nach einem der vorhergehenden Ansprüche,
wobei die Rotationsbremse (170) einen Reibkörper aufweist, der mit einem Teil der Pedalachse (120) in Kontakt ist, um die Bremskraft in Form einer Reibkraft auf die Pedalachse (120) auszuüben.

3. Pedal (100) nach einem der vorhergehenden Ansprüche,
wobei die Rotationsbremse (170) in Form einer Wellenmanschette ausgebildet ist, die um die Pedalachse (120) herum angeordnet ist, und
wobei die Wellenmanschette (170) einen quer zur Umfangsrichtung verlaufenden Schlitz (171) aufweist, der am Umfang der Wellenmanschette (170) einen Spalt mit variabler Spaltbreite definiert.

4. Pedal (100) nach Anspruch 3,
wobei die Wellenmanschette (170) eine Klemmkraft auf die Pedalachse (120) ausübt, und wobei der Betrag der Klemmkraft durch eine Variation der Spaltbreite veränderlich ist.

5. Pedal (100) nach Anspruch 3 oder 4,
wobei die Rotationsbremse (170) einen Vorsprung (172) aufweist, der sich radial vom Umfang der Rotationsbremse (170) nach außen erstreckt, und
wobei der Vorsprung (172) und das Betätigungsmittel (180) derart zueinander ausgerichtet sind, dass mittels des Betätigungsmittels (180) eine Kraft auf den Vorsprung (172) ausübbar ist, um hierüber die Spaltbreite in der Rotationsbremse (170) zu variieren und dadurch die auf die Pedalachse (120) wirkende Bremskraft einzustellen.

6. Pedal (100) nach Anspruch 5,
wobei der Vorsprung (172) eine Ausnehmung (173) aufweist, in die das Betätigungsmittel (180) eingreift.

7. Pedal (100) nach Anspruch 5 oder 6,
wobei im Pedalkörper (110) eine Aussparung (190) vorgesehen ist, in die der Vorsprung (172) der Rotationsbremse (170) einsetzbar ist, und
wobei die Aussparung (190) ein Übermaß im Vergleich zum Vorsprung (172) aufweist, sodass der Vorsprung (172) beweglich in der Aussparung (190) angeordnet ist.

8. Pedal (100) nach einem der vorhergehenden Ansprüche,
wobei die Rotationsbremse (170) auf einer Seite des Pedalkörpers (110) angeordnet ist, auf der die Pedalachse (120) aus dem Pedalkörper (110) austritt.

9. Pedal (100) nach einem der vorhergehenden Ansprüche,
wobei die Bremskraft zwischen 0% und 100% frei einstellbar ist.

10. Pedal (100) nach einem der vorhergehenden Ansprüche,
wobei die Bremskraft stufenlos einstellbar ist.

## Claims

1. A pedal (100) comprising:
a pedal body (110),
a pedal axis (120) which extends at least partly through the pedal body (110),
wherein the pedal body (110) is supported to be rotatable on the pedal axis (120), and
an adjustable rotation brake (170) which, during rotation of the pedal body (110), exerts an adjustable braking force on the pedal axis (120) in order to brake the rotation of the pedal body (110) when compared to an unbraked rotation,
wherein the rotation brake (170) is integrated in the pedal body (110), and
wherein the rotation brake (170) is actuatable in a manner accessible from outside by means of actuating means (180) arranged in the pedal body (110) in order to thereby adjust the braking force of the rotation brake (170),
**characterized in that** the actuating means (180) is configured in the form of a threaded pin which is screwed into a thread provided in the pedal body (110), and wherein an axial end (181) of the threaded pin (180) projecting into the pedal body (110) is in contact with the rotation brake (170) and exerts a force on the rotation brake (170).

2. The pedal (100) according to any of the preceding claims,
wherein the rotation brake (170) has a friction body which is in contact with a part of the pedal axis (120) in order to exert the braking force on the pedal axis (120) in the form of a frictional force.

3. The pedal (100) according to any of the preceding claims,
wherein the rotation brake (170) is configured in the form of a shaft sleeve which is arranged around the pedal axis (120), and
wherein the shaft sleeve (170) has a slot (171) which is transverse with respect to the circumferential direction and which defines a gap with a variable gap width on the circumference of the shaft sleeve (170).

4. The pedal (100) according to claim 3,
wherein the shaft sleeve (170) exerts a clamping force on the pedal axis (120), and wherein the amount of the clamping force is variable by a variation of the gap width.

5. The pedal (100) according to claim 3 or 4,
wherein the rotation brake (170) has a projection (172) which extends radially outwards from the circumference of the rotation brake (170), and
wherein the projection (172) and the actuating means (180) are oriented with respect to each other such that a force can be exerted on the projection (172) by means of the actuating means (180) in order to thereby vary the gap width in the rotation brake (170) and thereby adjust the braking force acting on the pedal axis (120).

6. The pedal (100) according to claim 5,
wherein the projection (172) has a recess (173) into which the actuating means (180) engages.

7. The pedal (100) according to any of claims 5 or 6,
wherein a recess (190) is provided in the pedal body (110), into which the projection (172) of the rotation brake (170) can be inserted, and
wherein the recess (190) has an oversize when compared to the projection (172) so that the projection (172) is arranged to be movable in the recess (190).

8. The pedal (100) according to any of the preceding claims,
wherein the rotation brake (170) is arranged on a side of the pedal body (110) on which the pedal axis (120) emerges from the pedal body (110).

9. The pedal (100) according to any of the preceding claims,
wherein the braking force is adjustable freely between 0% and 100%.

10. The pedal (100) according to any of the preceding claims,
wherein the braking force is adjustable continuously.

## Revendications

1. Pédale (100) comprenant :
un corps de pédale (110),
un axe de pédale (120) qui s'étend au moins par sections à travers le corps de pédale (110),
le corps de pédale (110) étant monté de manière rotative sur l'axe de pédale (120), et
un frein de rotation réglable (170) qui, pendant la rotation du corps de pédale (110), exerce une force de freinage réglable sur l'axe de pédale (120) afin de freiner la rotation du corps de pédale (110) par rapport à une rotation sans freinage,
le frein de rotation (170) étant intégré dans le corps de pédale (110), et
le frein de rotation (170) pouvant être actionné au moyen d'un moyen d'actionnement (180) disposé dans le corps de pédale (110) et accessible de l'extérieur, afin de régler la force de freinage dudit frein de rotation (170),
**caractérisée en ce que** le moyen d'actionnement (180) est conçu sous la forme d'une vis sans tête qui est vissée dans un filetage prévu dans le corps de pédale (110), et dans laquelle une extrémité axiale (181) de ladite vis sans tête (180), saillant dans le corps de pédale (110), est en contact avec le frein de rotation (170) et exerce une force sur ledit frein de rotation (170).

2. Pédale (100) selon l'une des revendications précédentes,
le frein de rotation (170) comportant un corps de friction qui est en contact avec une partie de l'axe de pédale (120) afin d'exercer la force de freinage sous la forme d'une force de friction sur l'axe de pédale (120).

3. Pédale (100) selon l'une des revendications précédentes,
le frein de rotation (170) étant conçu sous la forme d'un collier d'arbre disposé autour de l'axe de pédale (120), et
le collier d'arbre (170) comportant une fente (171) s'étendant transversalement à la direction circonférentielle, ladite fente définissant, à la périphérie dudit collier d'arbre (170), un interstice de largeur variable.

4. Pédale (100) selon la revendication 3,
le collier d'arbre (170) exerçant une force de serrage sur l'axe de pédale (120), la valeur de ladite force de serrage étant variable par modification de la largeur de l'interstice.

5. Pédale (100) selon la revendication 3 ou 4,
le frein de rotation (170) comportant une saillie (172) qui s'étend radialement vers l'extérieur à partir de la périphérie du frein de rotation (170), et
la saillie (172) et le moyen d'actionnement (180) étant alignés l'un par rapport à l'autre de telle sorte qu'une force puisse être exercée sur la saillie (172) au moyen dudit moyen d'actionnement (180) afin de faire varier la largeur de l'interstice dans le frein de rotation (170) et d'ajuster ainsi la force de freinage agissant sur l'axe de pédale (120).

6. Pédale (100) selon la revendication 5,
la saillie (172) présentant un évidement (173) dans lequel s'engage le moyen d'actionnement (180).

7. Pédale (100) selon la revendication 5 ou 6,
un évidement (190) étant prévu dans le corps de pédale (110), dans lequel peut être insérée la saillie (172) du frein de rotation (170), et
l'évidement (190) présentant un jeu par rapport à la saillie (172), de sorte que la saillie (172) est disposée de manière mobile dans l'évidement (190).

8. Pédale (100) selon l'une des revendications précédentes,
le frein de rotation (170) étant disposé sur un côté du corps de pédale (110) où l'axe de pédale (120) sort du corps de pédale (110).

9. Pédale (100) selon l'une des revendications précédentes,
la force de freinage étant librement réglable entre 0 % et 100 %.

10. Pédale (100) selon l'une des revendications précédentes,
la force de freinage étant réglable en continu.
